# EUROPÄISCHE PATENTANMELDUNG

(11) **EP 2 842 713 A1**
(43) Veröffentlichungstag der Anmeldung: **04.03.2015**
(21) Anmeldenummer: 13004317.7
(22) Anmeldetag: 03.09.2013
(51) Int. Cl.: B29C 45/00

(54) **Gelenk**

(71) Anmelder: Massold, Andreas, 72336 Balingen (DE); Sommer, Frank, 72336 Balingen (DE)
(72) Erfinder: Massold, Andreas, 72336 Balingen (DE); Sommer, Frank, 72336 Balingen (DE)
(74) Vertreter: Späth, Dieter

(57) **Zusammenfassung**

Die Erfindung betrifft einen Deckel (7), der mit einem Gelenk (8) schwenkbar an einem Einfüllstutzen (1) eines Scheibenwaschwasserbehälters befestigt ist. Die Erfindung schlägt vor, das Gelenk (8) mit Zapfen (10) auszubilden, die mit Zwischenraum in Lagerlöchern (15) aufgenommen sind. Beim Spritzgießen wird der Zwischenraum von Schiebern eines Spritzgießwerkzeugs eingenommen, so dass der Deckel (7) zusammen mit dem Einfüllstutzen (1) in einem Schritt spritzgegossen werden kann.

## Beschreibung

Die Erfindung betrifft ein Gelenk mit den Merkmalen des Oberbegriffs des Anspruchs 1. Das Gelenk ist insbesondere zu einer schwenkbaren Befestigung eines Deckels an einer Einfüllöffnung eines Scheibenwaschwasserbehälters eines Kraftwagens vorgesehen. Das Gelenk ist allerdings auch zur schwenkbaren Befestigung von Deckeln anderer Behälter von Kraftfahrzeugen oder an anderer Stelle und allgemein zur schwenkbaren Verbindung zweier Teile verwendbar.

Zur Befestigung eines Deckels an einer Einfüllöffnung eines Scheibenwaschwasserbehälters in einem Kraftwagen sind heutzutage biegbare Kunststofflaschen üblich, die einstückig mit dem Deckel sind und beispielsweise einen Ring an einem deckelfernen Ende aufweisen, der in eine die Einfüllöffnung umschließende Nut eingeschnappt ist. Kunststofflaschen haben den Nachteil, dass sie über die Jahre verspröden und brechen können. Auch bei niedrigen Temperaturen besteht Bruchgefahr wegen Erniedrigung einer Elastizität des Kunststoffs. Auch häufiges Öffnen und Schließen des Deckels kann zu einem Bruch der Lasche führen. Außerdem kann eine Kunststofflasche aufgrund ihrer Elastizität einen offenen Deckel soweit in einer Schließrichtung über die Einfüllöffnung schwenken, dass er einem Einfüllen von Scheibenwaschwasser im Weg steht; das erschwert ein Einfüllen von Scheibenwaschwasser.

Die Offenlegungsschrift DE 10 2008 017 133 A1 offenbart einen Einfüllstutzen eines Scheibenwaschwasserbehälters mit einem Deckel, der mit einem Gelenk schwenkbar mit dem Einfüllstutzen verbunden ist. Zur Ausbildung des Gelenks weist der Deckel einen U-förmigen Bügel auf, der rechtwinklig abgewinkelt außen an einem Umfang des Deckels angeordnet ist und der einen Haken außen an einem Umfang des Einfüllstutzens untergreift. Der Deckel und der Einfüllstutzen werden als separate Teile aus Kunststoff spritzgegossen und müssen anschließend zusammengebaut werden.

Aufgabe der Erfindung ist ein Gelenk vorzuschlagen, das zwei Teile schwenkbar verbindet, ohne das Gelenk oder die beiden Teile zusammenbauen zu müssen.

Gelöst wird diese Aufgabe durch ein Gelenk mit den Merkmalen des Anspruchs 1. Das erfindungsgemäße Gelenk weist einen Zapfen und ein Lagerloch auf, in dem der Zapfen schwenkbar aufgenommen ist. Der Zapfen und das Lagerloch sind zwei Teile, die gemäß der Erfindung in einem Schritt, d.h. gemeinsam gegossen, insbesondere spritzgegossen sind. Der Zapfen ist in das Lagerloch eingreifend gegossen, nach einem Entformen greift der Zapfen schwenkbar in das Lagerloch ein, es findet kein Einbringen, Einsetzen oder dgl. des Zapfens in das Lagerloch statt, ein Zusammenbau des Gelenks entfällt. Vorteil der Erfindung ist die Her- und Fertigstellung des Gelenks durch Gießen, insbesondere Spritzgießen in einem Schritt ("ein Schuss") ohne Zusammenbau. Vorzugsweise wird das erfindungsgemäße Gelenk aus Kunststoff hergestellt, ein Gießen oder Spritzgießen aus einem anderen Werkstoff, insbesondere aus Metall, ist allerdings möglich. Vorgesehen, aber nicht zwingend ist die Herstellung des Zapfens und des Lagerlochs aus demselben Werkstoff.

Vorzugsweise sind der Zapfen und das Lagerloch so gestaltet und angeordnet, dass der Zapfen schwenkbar und unlösbar im Lagerloch aufgenommen ist. Mit unlösbar ist gemeint, dass sich das Gelenk nicht, jedenfalls nicht ohne Verformung oder Zerstörung, auseinander bauen lässt, der Zapfen lässt sich durch keine wie auch immer gestaltete Bewegung aus dem Lagerloch herausbewegen. Zur schwenkbaren und unlösbaren Verbindung sieht eine Ausgestaltung der Erfindung zwei gleichachsige Zapfen vor, die in entgegengesetzten Richtungen, also auseinander oder zueinander, in zwei Lagerlöcher eingreifen.

Bei Ausgestaltungen der Erfindung besteht ein Zwischenraum zwischen dem Zapfen und dem Lagerloch. Dieser Zwischenraum, der insbesondere während des Gießens den Zapfen im Lagerloch umschließt, ermöglicht die Herstellung des erfindungsgemäßen Gelenks durch Gießen in einem Schritt ohne nachfolgenden Zusammenbau. Beim Gießen nimmt ein Gießwerkzeug, ein in das Gießwerkzeug eingelegter Kern oder ein im Gießwerkzeug beweglicher Schieber den Zwischenraum ein, der den Zapfen im Lagerloch umgibt, so dass der Zapfen und das Lagerloch in einem Schritt und trotzdem als zwei Teile gegossen werden können, die ohne Verformung des Zapfens, des Lagerlochs oder eines anderen Teils gegeneinander beweglich, nämlich schwenkbar sind. Zusätzlich zur Schwenkbarkeit kann das erfindungsgemäße Gelenk einen oder mehrere translatorische, vorzugsweise begrenzte Freiheitsgrade aufweisen.

Eine Ausgestaltung der Erfindung sieht vor, dass das Gelenk einen Deckel und eine durch Schwenken des Deckels öffenbare und schließbare Öffnung aufweist. Insbesondere ist die Öffnung eine Einfüllöffnung eines Scheibenwaschwasserbehälters oder eines sonstigen Behälters in einem Kraftwagen, die mit dem Deckel verschließbar ist. Das Lagerloch ist an der Öffnung und der Zapfen am Deckel vorgesehen oder umgekehrt, wobei das Lagerloch und/oder der Zapfen vorzugsweise einstückige Bestandteile der Öffnung und/oder des Deckels sind.

Eine bevorzugte Weiterbildung der Erfindung sieht vor, dass das Gelenk und etwaige zugeordnete Teile so ausgestaltet sind, dass der Deckel in eine Offenstellung verbringbar ist, aus der er nicht unmittelbar durch Schwenken auf die Öffnung verbringbar, d.h. schließbar ist. Möglich ist diese Ausgestaltung beispielsweise durch eine Gestaltung des Gelenks, durch die nach einem Öffnen des Deckels durch Schwenken eine translatorische Bewegung den Deckel in die genannte Offenstellung verbringt, aus der der Deckel nicht durch Schwenken, sondern nur durch eine translatorische Bewegung herausbewegbar ist in eine Stellung, in der er durch Schwenken auf die Öffnung bewegbar ist. Diese Ausgestaltung der Erfindung vermeidet ein unbeabsichtigtes Zuklappen des Deckels während eines Einfüllens einer Flüssigkeit in die Öffnung.

Eine Weiterbildung der Erfindung sieht ein Filter in der oder unterhalb der Öffnung oder jedenfalls an einer Stelle vor, die beim Einfüllen von der Flüssigkeit durchströmt wird. Das Filter kann beispielsweise ein Filtersieb sein, das einstückig mit einem die Öffnung aufweisenden Stutzen gegossenes ist. Eine andere Möglichkeit ist ein Einlegen eines Filters in ein Gießwerkzeug vor dem Gießen.

Des weiteren betrifft die Erfindung ein Spritzgießwerkzeug zum Herstellen eines Gelenks der vorstehend erläuterten Art. Das Spritzgießwerkzeug weist eine Kavität, d.h. einen, eventuell auch mehrere Hohlräume mit der Form des herzustellenden Zapfens und Lagerlochs einschließlich beispielsweise eines Deckels und eines Einfüllstutzen eines Behälters oder des Behälters auf. Erfindungsgemäß weist das Gießwerkzeug einen Schieber mit einer den Zapfen beim Gießen formenden Höhlung auf. Der Schieber umschließt den Zapfen in der das Lagerloch formenden Kavität im Gießwerkzeug, so dass der in das Lagerloch eingreifende Zapfen mit einem vom Schieber im Gießwerkzeug freigehaltenen Zwischenraum, der den Zapfen im Lagerloch umgibt, durch Gießen in einem Schritt mit dem Lagerloch hergestellt wird. Nach dem Gießen wird der Schieber axial vom Zapfen gezogen und dabei zugleich aus dem Lagerloch herausgezogen, so dass nach Öffnen des Gießwerkzeugs das Gelenk oder beispielsweise ein Deckel und ein Einfüllstutzen oder ein Behälter, mit dem der Deckel über das Gelenk schwenkbar verbunden ist, entformt werden kann.

Weitere Merkmale der Erfindung ergeben sich aus der folgenden Beschreibung einer Ausführungsform in Verbindung mit den Ansprüchen und der Zeichnung. Die einzelnen Merkmale können je für sich oder zu mehreren in beliebiger Kombination bei Ausführungsformen der Erfindung verwirklicht sein.

Die Erfindung wird nachfolgend anhand eines in der Zeichnung dargestellten Ausführungsbeispiels näher erläutert. Es zeigen:
- Figuren 1 und 2: einen Einfüllstutzen mit einem Gelenk gemäß der Erfindung in perspektivischer Darstellung mit geschlossenem Deckel (Figur 1) und mit offenem Deckel (Figur 2); und
- Figur 3: das Gelenk aus Figuren 1 und 2 mit dem Deckel in einer offenen Stellung und Gießstellung in vergrößerter Seitenansicht.

Der in der Zeichnung dargestellte, zylinderrohrförmige Einfüllstutzen 1 ist für einen nicht dargestellten Scheibenwaschwasserbehälter in einem Kraftwagen vorgesehen. Der Einfüllstutzen 1 ist durch Spritzgießen aus Kunststoff hergestellt, ein in einer vorgesehenen Einbaulage unteres Ende ist durch einen in der Zeichnung nicht sichtbaren Boden geschlossen, der einstückig mit dem Einfüllstutzen 1 ist.

Am unteren Ende steht seitlich ein Schlauchanschlussstutzen 2 mit einer Tannenbauprofilierung 3 vom Einfüllstutzen 1 ab, der ebenfalls einstückig mit dem Einfüllstutzen 1 ist. Auf den Schlauchanschlussstutzen 2 ist ein nicht dargestellter Schlauch zur Verbindung des Einfüllstutzens 1 mit dem nicht dargestellten Scheibenwaschwasserbehälter steckbar.

Oberhalb des Schlauchanschlussstutzens 2 steht eine Befestigungsrippe 4 seitlich vom Einfüllstutzen 1 ab, die mit dem Einfüllstutzen 1 einstückig ist.

In Verlängerung des Schlauchanschlussstutzens 2 ist ein Filter 5 mit U-förmigem Querschnitt im Einfüllstutzen 1 angeordnet. Das Filter 5 durchsetzt den Einfüllstutzen 1 quer und seine Ränder sind in den Boden und eine Umfangswand des Einfüllstutzens 1 eingelassen, so dass eine in den Einfüllstutzen 1 eingefüllte Flüssigkeit durch das Filter 5 strömen muss, bevor sie in den Schlauchanschlussstutzen 2 fließt. Das Filter 5 wird vor dem Spritzgießen in ein nicht dargestelltes Spritzgießwerkzeug eingelegt.

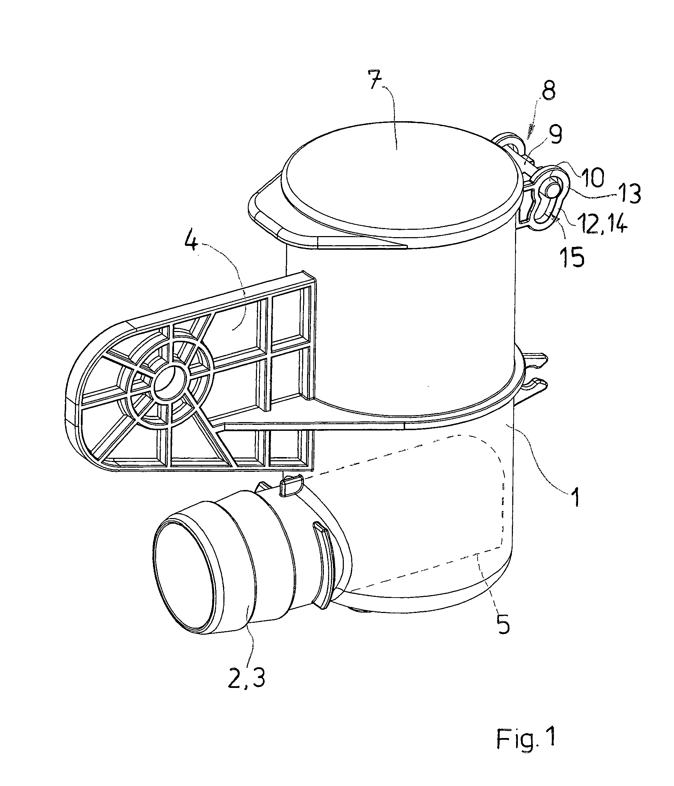

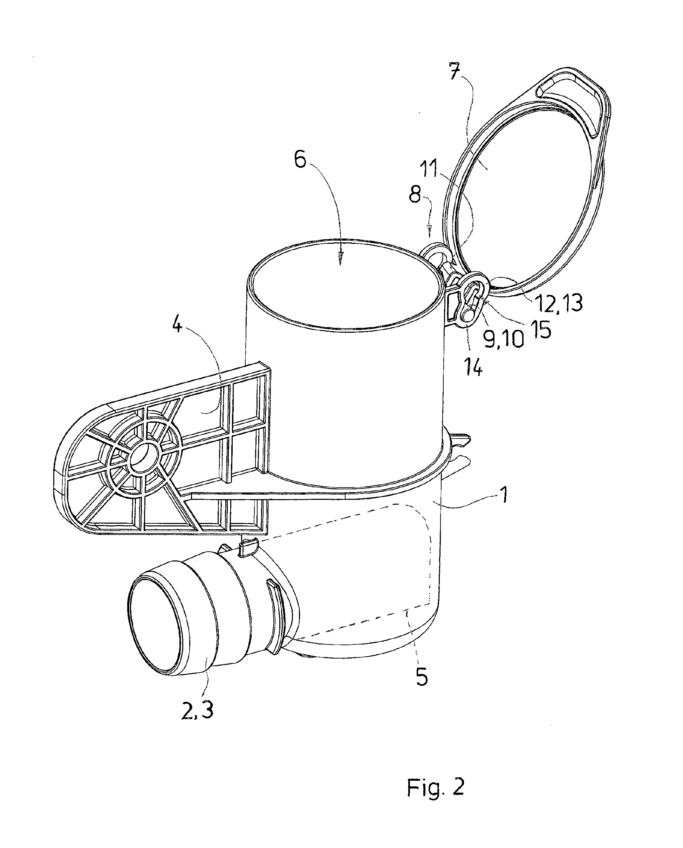

Ein in der vorgesehenen Einbaulage oberes Ende des Einfüllstutzens 1 ist offen, d.h. der Einfüllstutzen 1 weist eine Öffnung 6 auf, die mit einem Deckel 7 verschlossen bzw. verschließbar ist. Figur 1 zeigt eine Schließstellung und Figur 2 eine Offenstellung des Deckels 7, in der der Deckel 7 seitlich der Öffnung 6 des Einfüllstutzens 1 schräg nach außen/oben steht. In der Schließstellung ist der Deckel 7 auf die Öffnung des Einfüllstutzens 1 aufgeschnappt.

Mit einem erfindungsgemäßen Gelenk 8 ist der Deckel 7 schwenkbar mit dem Einfüllstutzen 1 verbunden. Zur Bildung des Gelenks 8 weist der Deckel 7 einen Zylinderstift 9 auf, dessen beide Enden gleichachsige Zapfen 10 bilden, die in entgegengesetzten Richtungen abstehen. Der Zylinderstift 9 verläuft parallel zu einer gedachten Tangente des Deckels 7 seitlich etwas außerhalb und unterhalb des Deckels 7 und der Öffnung 6 des Einfüllstutzens 1. Der Zylinderstift 9 ist über eine mit dem Deckel 7 einstückige, rechtwinklig abgewinkelte Lasche 11 einstückig mit dem Deckel 7 verbunden.

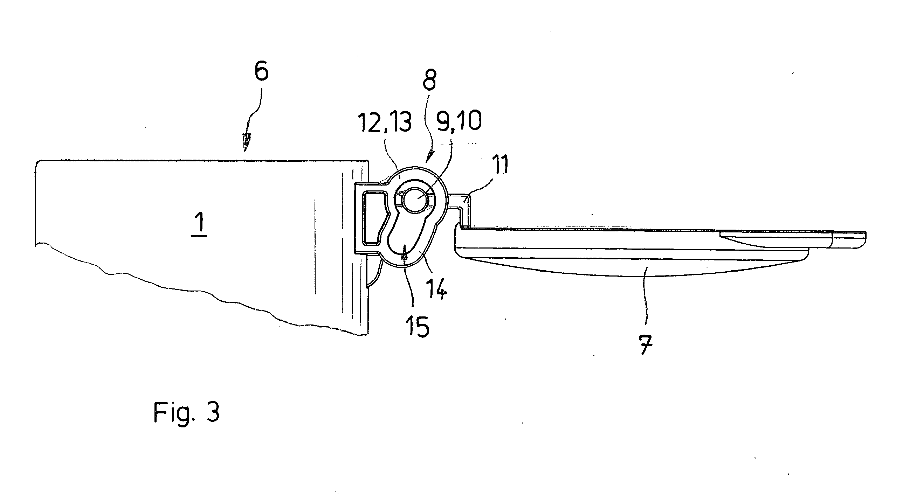

Des weiteren weist zur Ausbildung des Gelenks 8 der Einfüllstutzen 1 an seinem oberen Ende zwei mit ihm einstückige Ringbügel 12 auf, die parallel zueinander und zu einer gedachten Axialebene des Einfüllstutzens 1 nach außen vom Einfüllstutzen 1 abstehen. Ein Abstand der beiden Ringbügel 12 voneinander ist so groß, dass die Ringbügel 12 die beiden Enden des Zylinderstifts 9, die die beiden Zapfen 10 bilden, umschließen. In einem oberen Abschnitt 13 sind die beiden Ringbügel 12 kreisförmig, in einem unteren Abschnitt 14 sind sie U-förmig, so dass die Ringbügel 12 schlüssellochförmige Lagerlöcher 15 bilden, in denen die Zapfen 10 aufgenommen sind. In den U-förmigen Abschnitten 14 der Ringbügel 12 sind die Lagerlöcher 15 ungefähr so breit wie ein Durchmesser der Zapfen 10. In den kreisförmigen Abschnitten 13 der Ringbügel 12 ist ein Durchmesser der Lagerlöcher 15 größer als die Durchmesser der Zapfen 10, so dass die Ringbügel 12 und die Lagerlöcher 15 die Zapfen 10 mit einem Zwischenraum umschließen, wenn sich die Zapfen 10 in den kreisförmigen Abschnitten 13 der Ringbügel 12 befinden, wie es in Figuren 1 und 3 zu sehen ist. Der Deckel 7 lässt sich durch Schwenken öffnen und schließen, wenn sich die Zapfen 10 in den kreisförmigen Abschnitten 13 der Ringbügel 12 befinden und die Zapfen 10 befinden sich wie in Figur 1 zu sehen in den kreisförmigen Abschnitten der Ringbügel 12, wenn der Deckel 7 geschlossen ist.

Das Gelenk 8, das von den Zapfen 10 und den Ringbügeln 12 bzw. den Lagerlöchern 15 gebildet wird, verbindet den Deckel 7 schwenkbar mit dem Einfüllstutzen 1. Die Zapfen 10 und die Ringbügel 12 sind so ausgestaltet und angeordnet, dass sich die Zapfen 10 nicht, jedenfalls nicht ohne Verformung der Ringbügel 12 oder eines anderen Teils, aus den Lagerlöchern 15 herausbewegen lassen, d.h. die Zapfen 10 sind unlösbar in den Lagerlöchern 15 aufgenommen und der Deckel 7 ist über das Gelenk 8 unlösbar mit dem Einfüllstutzen 1 verbunden. Ist der Deckel 7 offen, lässt er sich translatorisch nach unten bewegen, so dass die Zapfen 10 in die U-förmigen Abschnitte 14 der Ringbügel 12 gelangen, wie es in Figur 2 zu sehen ist. In dieser Offenstellung liegt der Deckel 7 mit einem Rand außen an den kreisförmigen Abschnitten 13 der Ringbügel 12 an, so dass sich der Deckel 7 nicht in die Schließstellung auf die Öffnung 6 des Einfüllstutzens 1 schwenken lässt. Dadurch wird ein unbeabsichtigtes Schließen des Deckels 7 während eines Einfüllens von Scheibenwaschwasser in den Einfüllstutzen 1 vermieden.

Hergestellt wird der Einfüllstutzen 1 gemeinsam mit dem Deckel 7 durch Spritzgießen in einem nicht dargestellten Spritzgießwerkzeug in einem Schritt ("ein Schuss"). Hergestellt wird der Deckel 7 in der in Figur 3 gezeichneten offenen Stellung, in der er aus der geschlossenen Stellung um 180°nach außen in eine Radialebene zum Einfüllstutzen 1 geschwenkt ist. Die beiden Zapfen 10 des Deckels 7 befinden sich in einer Mitte der kreisförmigen Abschnitte 13 der Ringbügel 12, so dass die Ringbügel 12 die Zapfen 14 mit Zwischenraum umschließen. Diese aus der geschlossenen Stellung um 180° geschwenkte offene Stellung des Deckels 7, in der sich die Zapfen 10 in der Mitte der kreisförmigen Abschnitte 13 der Ringbügel 12 befinden, kann auch als Gießstellung bezeichnet werden. Beim Spritzgießen werden die Zwischenräume zwischen den Zapfen 10 und den Ringbügeln 12 von zwei Schiebern ausgefüllt, die axial zu den Zapfen 10 im Spritzgießwerkzeug verschiebbar sind. Diese nicht dargestellten Schieber des Spritzgießwerkzeugs füllen beim Spritzgießen die Lagerlöcher 15 aus und weisen Höhlungen in Form von Sacklöchern in ihren Stirnenden auf, die beim Spritzgießen die Zapfen 10 bzw. den Zylinderstift 9 formen, dessen beide Enden die Zapfen 10 bilden. Nach dem Spritzgießen werden die nicht dargestellten Schieber im ebenfalls nicht dargestellten Spritzgießwerkzeug axial von den Zapfen 10 und aus den Lagerlöchern 15 gezogen und nach Ziehen eventueller weiterer Schieber beispielsweise aus dem Schlauchanschlussstutzen 2 heraus und nach Öffnen des Spritzgießwerkzeugs wird der Einfüllstutzen 1 mit dem Deckel 7 entformt. Die Zapfen 10 greifen durch die erfindungsgemäße Herstellung durch Spritzgießen ohne Zusammenbau nach dem Spritzgießen in die Lagerlöcher 15 ein und verbinden den Deckel 7 ohne Zusammenbau unlösbar und schwenkbar mit dem Einfüllstutzen 1.

Der Einfüllstutzen 1 kann auch einstückiger Bestandteil des Scheibenwaschwasserbehälters oder auch eines anderen Behälters sein. Das erfindungsgemäße Gelenk 8 ist auch zur schwenkbaren Verbindung anderer Teile als eines Deckels 7 mit einem Einfüllstutzen 1 verwendbar.

## Patentansprüche

1. Gelenk mit einem Zapfen (10) und einem Lagerloch (15), in dem der Zapfen (10) schwenkbar aufgenommen ist, wobei der Zapfen (10) und das Lagerloch (15) zwei Teile sind, **dadurch gekennzeichnet, dass** der Zapfen (10) in das Lagerloch (15) eingreifend in einem Schritt mit dem Lagerloch (15) gegossen ist.

2. Gelenk nach Anspruch 1, **dadurch gekennzeichnet, dass** der Zapfen (10) und das Lagerloch (15) spritzgegossen sind.

3. Gelenk nach Anspruch 1 oder 2, **dadurch gekennzeichnet, dass** der Zapfen (10) und das Lagerloch (15) aus demselben Material bestehen.

4. Gelenk nach einem der Ansprüche 1 bis 3, **dadurch gekennzeichnet, dass** der Zapfen (10) unlösbar im Lagerloch (15) ist.

5. Gelenk nach Anspruch 4, **dadurch gekennzeichnet, dass** das Gelenk (8) zwei gleichachsige Zapfen (10) aufweist, die in entgegengesetzten Richtungen in zwei Lagerlöcher (15) eingreifen.

6. Gelenk nach einem der Ansprüche 1 bis 5, **dadurch gekennzeichnet, dass** zwischen dem Zapfen (10) und dem Lagerloch (15) ein Zwischenraum besteht.

7. Gelenk nach einem der Ansprüche 1 bis 6, **dadurch gekennzeichnet, dass** das Gelenk (8) einen Deckel (7) und eine durch Schwenken des Deckels (7) öffenbare und schließbare Öffnung (6) aufweist.

8. Gelenk nach Anspruch 7, **dadurch gekennzeichnet, dass** das Gelenk (7) an einem Stutzen (1) angeordnet ist, der einstückig mit dem Lagerloch (15) oder dem Zapfen (10) ist und dessen Öffnung (6) mit dem Deckel (7) verschließbar ist, der einstückig mit dem Zapfen (10) oder dem Lagerloch (15) ist.

9. Gelenk nach Anspruch 7 oder 8, **dadurch gekennzeichnet, dass** der Deckel (7) in eine Offenstellung verbringbar ist, aus der er nicht unmittelbar auf die Öffnung (6) geschwenkt werden kann.

10. Gelenk nach einem der Ansprüche 7 bis 9, **dadurch gekennzeichnet, dass** der Stutzen (1) ein Filter (5) aufweist.

11. Gießwerkzeug zum Herstellen eines Gelenks (8) nach einem der vorhergehenden Ansprüche, **dadurch gekennzeichnet, dass** das Gießwerkzeug einen Schieber mit einer den Zapfen (10) formenden Höhlung aufweist, der beim Gießen einen den Zapfen (10) im Lagerloch (15) umschließenden Zwischenraum einnimmt und der nach dem Gießen axial vom Zapfen (10) abziehbar und aus dem Lagerloch (15) herausziehbar ist.
